# EUROPÄISCHE PATENTSCHRIFT

(11) **EP 0 820 828 B1**
(45) Veröffentlichungstag und Bekanntmachung des Hinweises auf die Patenterteilung: **25.06.2003**
(21) Anmeldenummer: 97112399.7
(22) Anmeldetag: 19.07.1997
(51) Int. Cl.: B23D 45/02, B23D 45/12, B23D 47/02

(54) **Sägevorrichtung zum Erzeugen von Teilschnitten in stabförmigen Hohlprofilen**
Sawing device for making partial cuts in rod-shaped hollow profile members
Dispositif de sciage à couper partiellement des objets creux de forme allongée

(30) Priorität: 23.07.1996 DE 29612705 U
(43) Veröffentlichungstag der Anmeldung: 28.01.1998
(73) Patentinhaber: Rath, Johann, 74906 Bad Rappenau (DE); Rath-Jung, Jutta, 74906 Bad Rappenau (DE)
(72) Erfinder: Rath, Johann,, 74906 Bad Rappenau, (DE)
(74) Vertreter: Müller, Hans, Dipl.-Ing.

(56) Entgegenhaltungen:
- DE-A- 4 225 596
- DE-C- 3 807 158
- DE-U- 1 961 069
- FR-A- 1 147 266
- US-A- 1 548 950
- US-A- 1 691 519
- US-A- 2 601 878
- US-A- 2 610 389
- US-A- 3 988 125
- US-A- 4 528 881
- US-A- 4 749 013

## Beschreibung

### TECHNISCHES GEBIET

Die Erfindung betrifft eine Sägevorrichtung gemäß dem Oberbegriff des Anspruchs 1 mit der in stabförmigen Hohlprofilen Teilschnitte vorgenommen und damit Teilbereiche ausgeschnitten werden können. Derartige Teilschnitte kommen beispielsweise im Leichtmetallbau und dabei insbesondere beim Bau von Wintergärten und dergleichen Baukonstruktionen vor, wo stabförmige metallische Stranggußprofile fachwerkartig als Traggerüst aneinander befestigt werden. Derartige Teilschnitte müssen aus konstruktiven Gründen rechtwinklig durch das Profil hindurchgehen, um möglichst exakt rechtwinklige Teilbereiche aus dem Stabprofil herausklinken zu können.

### STAND DER TECHNIK

Im Metallbau und dabei auch im Zusammenhang mit dem Zertrennen von Aluminium-Stangprofilen sind Sägevorrichtungen bekannt, die ein rotierendes Sägeblatt beinhalten. Das zu zertrennende Hohlprofil wird dabei auf einem Auflagetisch positioniert und das Sägeblatt durch das Hohlprofil hindurchgeführt. Eine in diesem Zusammenhang bekannte Zugsäge besitzt ein höheneinstellbares Sägeblatt, das mit seiner parallel zum Auflagetisch, auf dem das Hohlprofil aufruht, ausgerichteten Rotationsachse gegen das Hohlprofil geführt werden kann. Ein vollständiges Zertrennen bzw. Ablängen des Profils ist ohne weiteres möglich. Bei einem teilweisen Einschneiden ergibt sich eine bogenförmige Schnittlinie, entsprechend der Umkreiskontur des Sägeblattes. Bei einem Hohlprofil sind damit die gegenüberliegenden Wände ungleich weit eingeschnitten. Um einen gleichmäßig tiefen Einschnitt in beiden gegenüberliegenden Wände zu erzeugen, muß das Profil um 180 Grad gedreht und ein erneutes teilweises Einschneiden vorgenommen werden. Damit die beiden Wandeinschnitte genau übereinanderliegen, muß das Sägeblatt bei diesem zweiten Einschneiden genau in der gleichen Ausrichtung zum Strangprofil wie beim ersten Schneidvorgang angesetzt werden. Andernfalls würden die beiden Teilschnitte in den beiden Wänden nicht genau übereinanderliegen beziehungsweise ungleich breit sein.

Eine weitere bekannte Schneidvorrichtung zum Zerteilen von metallischen, stabförmigen Profilen ist in Form einer Kappsäge bekannt. Die Kappsäge besitzt ebenfalls ein senkrecht zum Auflagetisch ausgerichtetes Sägeblatt. Dies Sägeblatt ist an einem Pendelarm gelagert. Der Pendelarm ist um eine parallel zum Auflagetisch verlaufenden Achse schwenkbar geführt. Auf diese Weise kann das Sägeblatt in einer senkrecht zum Auflagetisch verlaufenden Ebene bogenförmig raufund runtergeschwenkt werden. In gleicher Weise wie bei der oben genannten Zugsäge ist auch der mit der Kappsäge erzeugte Teilschnitt bogenförmig. Es sind damit die gleichen Probleme wie beim Verwenden einer Zugsäge vorhanden.

Aus der FR-A-1.147.266, die dem Oberbegriff des Patentanspruchs 1 entspricht, ist eine Maschine zum Zerteilen von metallischen Strangprofilen bekannt. Die Maschine besitzt einen Auflagetisch für die zu zerteilenden Profile. In dem Tisch befindet sich ein Schlitz, in den das Kreissägeblatt dieser Maschine, das in einer senkrecht zur Tischplatte verlaufenden Ebene senkrecht zur Tischplatte hin- und herbewegbar ist, von oben fast halb eintauchen kann. Die Nabe des Sägeblattes liegt in der untersten Stellung des Sägeblattes von oben auf dem zu zertrennenden Profil auf und verhindert so ein weiteres Eintauchen des Sägeblattes in den Schlitz. Mit dieser Sägemaschine lassen sich Profile vollständig zertrennen; Einschnitte in die Profile mit senkrechten Schnittkanten können dagegen in einer Schnittführung nicht hergestellt werden.

Eine weitere Sägevorrichtung der eingangs genannten Art ist aus der US-A-2,610,389 vorbekannt. Mit einer solchen vorbekannten Sägevorrichtung können die Mäntel von Höhlzylindern längs aufgetrennt werden. Dazu wird der beispielsweise kreiszylindrische, hohle Körper auf einen Tisch kopfstehend aufgesetzt und dort in seiner Lage festgelegt, wobei er zwischen der Tischplatte und auf seiner gegenüberliegenden Stirnfläche pressend anlegbare Befestigungsglieder eingespannt gehalten wird. Mittels eines in vertikaler Richtung verfahrbaren Sägeblattes kann dann sein Zylindermantel von oben nach unten aufgetrennt werden. Nach Beendigung des Auftrennens werden die oberen Befestigungsglieder von dem hohlzylindrischen Körper gelöst, der Körper von der Tischplatte weggenommen und gegebenenfalls ein neuer hohlzylindrischer Körper auf der Tischplatte aufgesetzt, durch die oberen Befestigungsglieder an der Tischplatte befestigt, so dass dann der Mantel auch von diesem hohlzylindrischen Körper längs aufgetrennt werden kann.

### DARSTELLUNG DER ERFINDUNG

Ausgehend von diesem vorbekannten Stand der Technik liegt der Erfindung die Aufgabe zugrunde, eine Sägevorrichtung anzugeben, mit der sich auf einfache und technisch exakte Weise Teilschnitte in stabförmigen metallischen Profilen, insbesondere Hohlprofilen erzeugen lassen.

Diese Erfindung ist durch die Merkmale des Anspruchs 1 gegeben. Ausgehend vom vorbekannten, gattungsgemäßen Stand der Technik zeichnet sich die Erfindung damit zusätzlich dadurch aus, dass die Tischplatte in der x-y-Ebene insbesondere parallel zur Längserstreckung des Schlitzes verstellbar ist und dass Einrichtungen an der Tischplatte vorhanden sind zum Positionieren eines stabförmigen Hohlprofils an der Tischplatte in bezüglich des Sägeblattes vorbestimmbarer, beliebiger Ausrichtung.

Erfindungsgemäß werden also die Einrichtungen zum Positionieren eines stabförmigen Hohlprofils beim Verstellen der Tischplatte mit verstellt, da die Einrichtungen nämlich ausschließlich an der verstellbaren Tischplatte vorhanden sind.

Auf diese Weise können in gegenüberliegenden Wänden eines beispielsweise Quadrat- oder Rechteckrohres gleich tiefe Einschnitte mit senkrechten Schnittkanten erzeugt werden. Durch zweimaliges oder mehrmaliges Einschneiden können Schnittflächen erzeugt werden, die einen entsprechend quadratischen oder rechteckigen Schnittbereich umfassen. Die aus einem derartigen Profil ausgeschnittenen Teilbereiche haben dann quadratische oder rechteckförmige Außenschnittflächen. Derartig zugeschnittene Profile können dann beim Zusammenbau beispielsweise eines Wintergartens oder einer anderen vergleichbaren Stabkonstruktion durch entsprechendes gegenseitiges oder einseitiges Ausklinken exakt aneinander vorbeigeführt beziehungsweise gestoßen werden. Mit den im Stand der Technik bekannten Sägevorrichtungen wären solche Schnitte und insbesondere Teilschnitte nur unverhältnismäßig aufwendig herzustellen, so dass ihr Einsatz im praktischen Betrieb äußerst ungeeignet wäre.

Eine sehr einfache Möglichkeit zum Verstellen der Tischplatte kann durch eine verstellbare Spindel bewirkt werden, die einerseits am Tisch und andererseits an der Tischplatte gelagert ist.

Die zum Positionieren eines stabförmigen Hohlprofils an der Tischplatte vorhandenen Einrichtungen können eine Anschlagleiste enthalten, die auf der Tischplatte beliebig ausgerichtet und befestigt werden kann, so dass die Hohlprofile in beliebiger Ausrichtung zum Sägeblatt ausgerichtet werden können. Die Anschlagleiste kann dabei an einem Feststellteil befestigt werden, das in einer Nut der Tischplatte festgeklemmt werden kann.

Nach einer in der Zeichnung näher dargestellten Ausführungsform ist an der Halterung für das Sägeblatt auch der motorische Rotationsantrieb für das Sägeblatt befestigt, der zusammen mit dem Sägeblatt hin- und herbewegt wird. Die mit dem Sägeblatt hin- und herbewegbaren Teile der Sägevorrichtung können entweder so vorhanden sein, daß sie außerhalb des vom Tisch eingenommenen Lichtraumprofils sich befindern, oder ausreichend oberhalb der Rotationsachse des Sägeblattes vorhanden sein, so daß sie von oben nicht auf den Tisch oder darauf befindliche Profile störend auftreffen können.

Zur leichteren Bewegungsführung des im Regelfall hoch- und herunterbewegbaren Sägeblattes ist an der Halterung des Sägeblattes eine Gegengewichtseinrichtung vorhanden, die nicht nur das Gewicht des Sägeblattes sondern alle hin- und herbewegbaren Teile gewichtsmäßig ausgleicht. Diese Gegengewichtseinrichtung kann Gasdruckfedern enthalten. Dadurch ist eine sehr schlanke und einfach herzustellende Gegengewichtseinrichtung herstellbar.

Zur Sicherung des Sägeblattes ist es vorteilhaft, insbesondere in dessen oberer Endlage eine Rastvorrichtung vorzusehen. Diese Rastvorrichtung kann beispielsweise über einen Bowdenzug aktiviert bzw. deaktiviert werden.

Zum schnellen und einfachen und doch exakten Ausrichten des Hohlprofils relativ zum Sägeblatt kann an dem Auflagetisch bzw. seiner Tischplatte eine Anschlagleiste angebracht sein, die sowohl in ihrer winkligen Ausrichtung als auch in ihrer Lage auf der Tischplatte beliebig lagefixierbar sein kann. Gegen diese Anschlagleiste braucht dann lediglich das Hohlprofil angehalten zu werden; ein zusätzliches Festklemmen des Hohlprofils an der Tischplatte ist in den meisten Fällen entbehrlich.

Um das Ausrichten des Profils bezüglich des Sägeblattes noch weiter zu erleichtern und sicherzustellen, daß das Sägeblatt auch exakt längs einer vormarkierten Linie in das Profil eindringt, kann eine Positionierhilfe vorgesehen werden. Diese Positionierhilfe kann genau oberhalb des in der Tischplatte befindlichen Schlitzes vorhanden sein und sich damit in der durch das Sägeblatt aufgespannten Fläche befinden. Um den Schneidvorgang durch seine Anwesenheit nicht zu behindern, ist diese Positionierhilfe aus dieser mit dem Sägeblatt fluchtenden Ebene herausbewegbar. Diese Bewegung kann beispielsweise eine Schwenkbewegung beinhalten, die um eine Schwenkachse verläuft, die beispielsweise senkrecht zur Tischfläche ausgerichtet und parallel zu der durch das Sägeblatt aufgespannten Ebene vorhanden ist. Sofern die Anschlagleiste zusätzlich noch innerhalb dieser Schwenkwelle höhenverstellbar ist, kann die Anschlagleiste zum Ausrichten des Profils von oben auf das Profil lose aufgelegt und das Profil gegebenenfalls zusammen mit dem Anschlagtisch exakt unterhalb des Sägeblattes ausgerichtet werden. Vor dem Absenken des Sägeblattes wird die Positionierhilfe seitlich weggeschwenkt und damit die Schnittfläche für das Sägeblatt frei zugänglich gemacht.

Weitere Ausführungsformen und Vorteile der Erfindung sind den sonstigen Merkmalen der Ansprüche sowie dem nachstehenden Ausführungsbeispiel zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine perspektivische Ansicht der Sägevorrichtung nach der Erfindung,
- Fig. 2: eine schematische Seitenansicht einer im Stand der Technik bekannten Sägevorrichtung,
- Fig. 3: eine schematisierte Seitenansicht der Sägevorrichtung von Fig. 1, mit Darstellung der Bewegungsrichtung des Sägeblattes und des Auflagetisches,
- Fig. 4: ein mit der Sägevorrichtung gemäß Fig. 1 bearbeitetes Hohlprofil.

### WEGE ZUM AUSFÜHREN DER ERFINDUNG

Eine Sägevorrichtung 10 besitzt einen Auflagetisch 11, auf dem ein metallisches Hohlprofil 12 aufliegt. In dem Hohlprofil 12 kann mittels eines rotierend antreibbaren Sägeblattes 14 ein Teilschnitt vorgenommen werden, wie noch weiter unten näher beschrieben wird.

Der Auflagetisch 11 besitzt eine etwa rechteckförmige Grundplatte 16, auf der vier Ständer 18, 20, 22, 24 angeschraubt sind. Jeweils zwei gegenüberliegende Ständer 18, 20 sowie 22, 24 sind kopfseitig durch eine Führungsstange 26 bzw. 28 miteinander verbunden. Die beiden Führungsstangen 26, 28 sind parallel zueinander, in X-Richtung ausgerichtet.

Auf diesen Führungsstangen 26, 28 ist eine Tischplatte 30 gelagert, die längs der Führungsstangen 26, 28 verstellbar und damit in X-Richtung beweglich an den Ständern 18, 20, 22, 24 gehalten ist. Die Verstellung der Tischplatte 30 in X-Richtung erfolgt mittels einer über ein Handrad 32 verstellbaren Spindel 34, die einerseits an einem an der Grundplatte 16 zusätzlich vorhandenen Ständer 36 sowie an einer von der Tischplatte 30 nach unten auskragenden Halterung 38 gelagert ist. Durch Hin- und Herdrehen des Handrades 32 kann die Tischplatte 30 also in X-Richtung hinund herbewegt werden.

In der in X-Y-Richtung ausgerichteten Tischplatte 30 ist eine in Y-Richtung verlaufende Nut 40 eingeformt. In diese Nut 40 greift von oben ein nutensteinartiges Feststellteil 42 hinein, das mittels eines Handgriffes 44 in der Nut 40 festgeklemmt bzw. gelöst werden kann. Dieses Feststellteil 42 ist mit einer Anschlagleiste 46 verbunden, die parallel zur Tischplatte 30 ausgerichtet ist. Die Anschlagleiste 46 kann einerseits längs der Nut 40 verstellt als auch um eine in senkrecht zur X-Y-Richtung verlaufenden Z-Achse verschwenkt werden. Das an der Anschlagleiste 46 anliegende Hohlprofil 12 kann also in beliebiger Ausrichtung auf der Tischplatte 30 positioniert werden.

In der Tischplatte 30 ist ein Schlitz 50 vorhanden, der sich durch die die Tischplatte 30 auf der Rückseite begrenzende Anschlagwand 52 fortsetzt. Dieser Schlitz 50 verläuft in Y-beziehungsweise Z-Richtung.

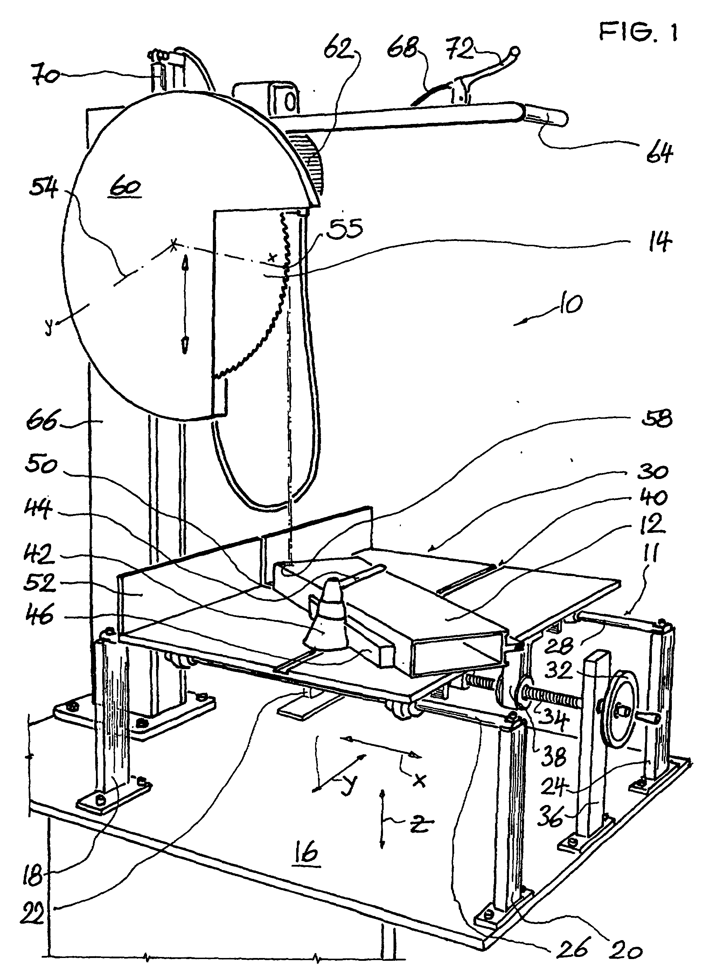

Das Sägeblatt 14 ist in X-Richtung ausgerichtet und ist in Z-Richtung hin- und herbewegbar. Seine Rotationsachse 54 ist außerhalb des von der Tischplatte 30 eingenommenen Lichtraumprofils vorhanden, so daß sie in Höhe des Schlitzes 50 neben der Tischplatte 30 und damit neben, das heißt in der Zeichnung links, der Anschlagwand 52 vorhanden ist. Damit läßt sich das Sägeblatt 14 mit seiner in X-Richtung am weitesten in das Lichtraumprofil der Tischlatte 30 vorspringenden Stelle 55 in Höhe des Schlitzes 50 in der Tischplatte 30 bringen. Bei seiner Rauf- und Runterbewegung in Z-Richtung taucht das Sägeblatt 14 damit mehr oder weniger durch den Schlitz 50 hindurch, je nachdem, wie weit die Rotationsachse 54 sich seitlich neben der Anschlagwand 52 vorbeibewegt. Das auf der Tischplatte 30 positionierte Hohlprofil 12 kann dann mit senkrechter vorderer Schnittkante 59 geschnitten werden. Der Schnitt kann mehr oder weniger weit das Hohlprofil aufschneiden. In Fig. 1 ist ein entsprechender Teilschnitt 58 markiert.

Das Sägeblatt 14 ist mit seiner Rotationsachse 54 in einer Halterung 60 gelagert, an der auch ein motorischer Rotationsantrieb 62 zum Antreiben des Sägeblattes 14 um seine Rotationsachse 54 befestigt ist. Außerdem ist an dieser Halterung 60 ein Handgriff 64 befestigt, der nach vorne, in Richtung des Handrades 32 des Auflagetisches 11 von der auf der Rückseite des Auflagetisches 11 positionierten, auf einem Ständer 66 in Z-Richtung beweglichen Halterung 60 auskragend befestigt ist.

An dem Handgriff 64 ist der Betätigungsgriff 72 eines Bowdenzuges 68 befestigt. Dieser Bowdenzug 68 hat eine Wirkverbindung mit einer nicht näher dargestellten Rasteinrichtung, mittels der das Sägeblatt 14 in seiner oberen Endposition unverrückbar gehalten werden kann. Durch Betätigen des Griffes 72 wird über den Bowdenzug eine Zugkraft auf diese Verrastung ausgeübt und diese entriegelt. Damit wird dann das Absenken der Halterung 60 und damit auch das Absenken des Sägeblattes 14 ermöglicht. Die Rauf- und Runterbewegung des Sägeblattes 14 zusammen mit der Halterung 60 erfolgt im vorliegenden Falle manuell. Die Rauf- und Runterbewegung kann allerdings auch motorisch unterstützt erfolgen. Zusätzlich ist im vorliegenden Fall vorgesehen, daß das Sägeblatt 14 in beliebigen Höhen lagemäßig arretiert werden kann. Eine Rastwirkung ist damit nicht nur in der oberen Endlage des Sägeblattes 14 sondern auch beispielsweise unmittelbar vor dessen Eintritt in das Hohlprofil 12 möglich.

Um die Rauf- und Runterbewegung des Sägeblattes 14 gewichtsmäßig zu erleichtern, ist dasselbe mit einer Gegengewichtseinrichtung verbunden. Diese Gegengewichtseinrichtung besitzt im vorliegenden Fall eine Gasdruckfeder 70. Dadurch ist die Bewegung der sich rauf- und runterbewegenden Teile mittels des Handgriffes 64 gewichtsmäßig einfach. Die Gegengewichtseinrichtung kann auch Gegengewichte aufweisen, die gewichtsmäßig den mit dem Sägeblatt 14 rauf- und runterbewegten Teilen der Sägevorrichtung in etwa entsprechen.

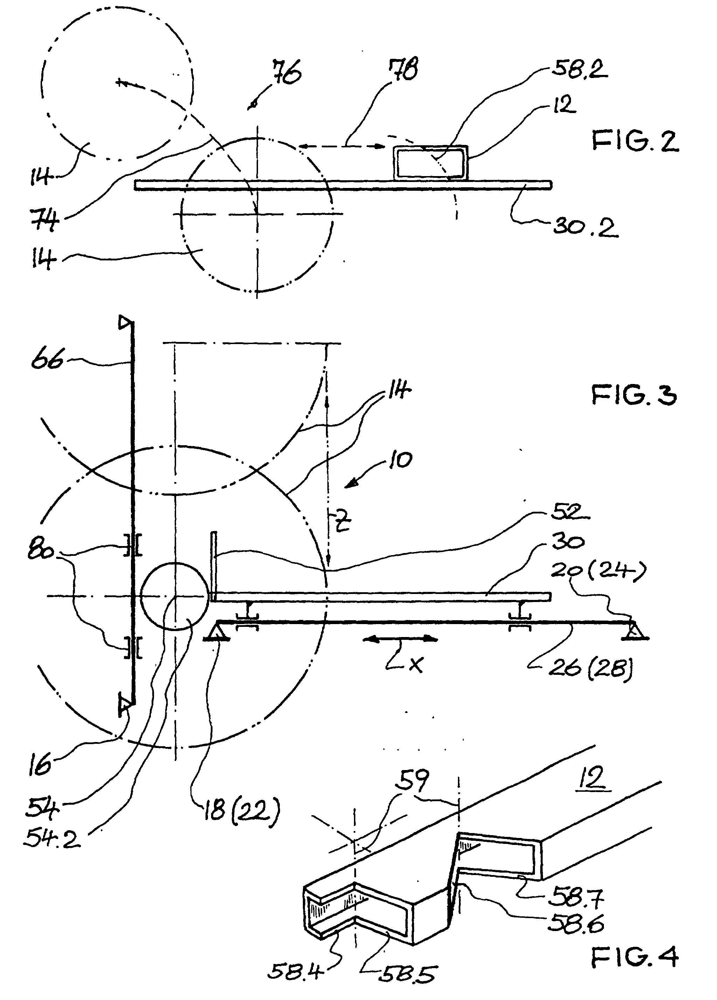

In Fig. 2 ist eine im Stand der Technik bekannte Kappsäge 76 dargestellt. Bei dieser Kappsäge 76 kann ein Sägeblatt 14 in einer senkrecht zu einer Tischplatte 30.2 verlaufenden Ebene längs eines Bogens 74 verschwenkt werden. Entsprechend bogenförmig verläuft der Teilschnitt 58.2 durch ein Profil 12 hindurch. Der gleiche Effekt und damit ein vergleichbarer bogenförmiger Teilschnitt tritt auch auf, wenn das Sägeblatt 14 parallel zur Tischplatte 30.2, längs des Doppelpfeils 78 gegen das Profil 12 verschoben wird.

In Fig. 3 sind die Bewegungsführungen bei der erfindungsgemäßen Vorrichtung 10 schematisiert dargestellt. Das Sägeblatt 14 läßt sich längs der Z-Richtung nach oben und unten bewegen. Die Führung in Z-Richtung verläuft längs des Ständers 66, der aufgrund seiner ausreichenden Biegesteifigkeit an seinem oberen Ende praktisch unverschiebbar und an seinem unteren Ende auf der Grundplatte 16 ebenfalls unverschieblich befestigt ist. Die Führungen für die Halterung 60 des Sägeblattes 14 sind mit dem Bezugszeichen 80 schematisiert dargestellt.

Die Tischplatte 30 mit ihrer hinteren Anschlagwand 52 ist längs Führungsstangen 26, 28 in X-Richtung verstellbar. Die Führungsstangen 26, 28 sind ihrerseits an Ständern 18, 20 bzw. 22, 24 fest auf der Grundplatte 16 befestigt.

In einem Hohlprofil 12 lassen sich damit Teilschnitte 58.4, 58.5, 58.6, 58.7 vornehmen, die jeweils gleich tief beziehungsweise gleich weit in die jeweiligen Wände des Profils und damit gleich tief beziehungsweise gleich weit in das Profil 12 hineinragen. Die Stoßkanten 59 zwischen aufeinandertreffende Teilschnitte 58.4 und 58.5 beziehungsweise 58.6 und 58.7 sind senkrecht zur Tischplatte 30 verlaufende Geraden.

Wenn im vorliegenden von Hohlprofilen die Rede ist, so sind damit alle stabförmigen, nicht nur hohle Profile gemeint. Auch Vollprofile können mit entsprechenden Teilschritten vorgenommen werden. Im konstruktiven Ingenieurbau werden allerdings Hohlprofile vorzugsweise eingesetzt.

Die erfindungsgemäße Sägevorrichtung hat den Vorteil, daß insbesondere bei leichten Aluminiumkonstruktionen, wie sie beispielsweise bei Wintergärten-Konstruktionen vorkommen, nicht nur eine optisch ästhetische sondern auch eine technisch einwandfreie Durchdringung von sich kreuzenden stabförmigen Profilen problemlos möglich wird. Unsaubere oder nicht miteinander genau fluchtende Einschnitte in Profilen gehören damit der Vergangenheit an.

Wenn im Vorstehenden gesagt ist, daß die Rotationsachse 54 in Z-Richtung neben der Anschlagwand 52 vorhanden ist, so gilt dies auch für die die Achse 54 bildende Welle 54.2.

## Patentansprüche

1. Sägevorrichtung (10) zum Erzeugen von Teilschnitten (58) in stabförmigen Hohlprofilen (12),
- mit einem Auflagetisch (11) für das Hohlprofil (12),
- mit einem Sägeblatt (14), das in einer senkrecht zur x-y-Ebene der Tischplatte (30) des Auflagetisches (11) verlaufenden x-z-Ebene hin- und herbewegbar ist,
- mit einem Schlitz (50) in dem Auflagetisch (11) und in seiner Tischplatte (30), durch den das Sägeblatt (14) in der senkrecht zur Tischplatte (30) verlaufenden x-z-Ebene senkrecht zur Tischplatte (30) hin- und herführbar und durch den in der Tischplatte (30) vorhandenen Schlitz (50) zumindest teilweise hindurchführbar ist, **dadurch gekennzeichnet, daß** die Rotationsachse (54) des Sageblattes (14) in Höhe der Tischplatte (30) bringbar ist,wobei das Sägeblatt (14) so hin- und herbewegbar ist, daß sich die in Höhe der Tischplatte (30) gebrachte Rotationsachse außerhalb der Tischplatte (30) befindet,
- dass die Tischplatte (30) in der X-Y-Ebene parallel zur Längserstreckung des Schlitzes (50) verstellbar ist,
- Einrichtungen an der Tischplatte (30) vorhanden sind zum Positionieren eines stabförmigen Hohlprofils (12) an der Tischplatte (30) in bezüglich des Sägeblattes (14) vorbestimmbarer, beliebiger Ausrichtung.

2. Sägevorrichtung nach Anspruch 1,
**dadurch gekennzeichnet, dass**
- eine verstellbare Spindel (34) zum Verstellen der Tischplatte (30) vorhanden ist, die einerseits an den Tisch (11) und anderseits an der Tischplatte (30) gelagert ist.

3. Sägevorrichtung nach Anspruch 1 oder 2,
**dadurch gekennzeichnet, dass**
- eine Anschlagleiste (46) für ein auf der Tischplatte (30) aufliegendes Hohlprofil (12) auf der Tischplatte (30) in X-Y-Richtung beliebig ausgerichtet befestigbar ist, so daß
- das Hohlprofil (12) auf der Tischplatte (30) in vorbestimmbarer, zum Sägeblatt (14) beliebiger Ausrichtung, auf der Tischplatte (30) positionierbar ist.

4. Sägevorrichtung nach Anspruch 3,
**dadurch gekennzeichnet, dass**
- die Anschlagleiste (46) an einem Feststellteil (42) befestigt ist, welches in einer Nut (40) der Tischplatte (30) festklemmbar ist.

## Claims

1. Sawing device (10) for making partial cuts (58) in rod-shaped hollow profile members (12),
- having a supporting table (11) for the hollow profile member (12),
- having a saw blade (14) which can be moved back and forth in an X-Z plane running perpendicularly to the X-Y plane of the table top (30) of the supporting table (11),
- having a slot (50) in the supporting table (11) and in its table top (30), by means of which slot (50) the saw blade (14) can be guided back and forth perpendicularly to the table top (30) in the X-Z plane running perpendicularly to the table top (30) and through which slot (50) in the table top (30) said saw blade (14) can be at least partly passed, **characterized in that** the rotation axis (54) of the saw blade (14) can be brought to the level of the table top (30), the saw blade (14) being movable back and forth in such a way that the rotation axis brought to the level of the table top (30) is located outside the table top (30), **in that** the table top (30) is adjustable in the X-Y plane parallel to the longitudinal extent of the slot (50), **in that** there are attachments on the table top (30) for positioning a rod-shaped hollow profile member (12) on the table top (30) in any desired orientation which can be predetermined relative to the saw blade (14).

2. Sawing device according to Claim 1, **characterized in that** there is an adjustable spindle (34) for adjusting the table top (30), this adjustable spindle (34) being mounted on the table (11) on the one hand and on the table top (30) on the other hand.

3. Sawing device according to Claim 1 or 2, **characterized in that** a stop strip (46) for a hollow profile member (12) supported on the table top (30) can be fastened on the table top (30) in any desired orientation in the X-Y direction, such that the hollow profile (12) can be positioned on the table top (30) in any desired predeterminable orientation relative to the saw blade (14).

4. Sawing device according to Claim 3, **characterized in that** the stop strip (46) is fastened to a locking part (42) which can be clamped in place in a groove (40) of the table top (30).

## Revendications

1. Dispositif de sciage (10) pour réaliser des découpes (58) dans des profilés creux en forme de barre (12),
- comprenant une table de support (11) pour le profilé creux (12),
- comprenant une lame de scie (14) pouvant aller et venir dans un plan x-z s'étendant perpendiculairement au plan x-y du plateau (30) de la table de support (11),
- comprenant une fente (50) dans la table de support (11) et dans son plateau (30), par le biais de laquelle la lame de scie (14) peut aller et venir perpendiculairement au plateau (30) de la table dans le plan x-z s'étendant perpendiculairement au plateau (30) de la table et peut au moins en partie traverser la fente (50) présente dans le plateau (30) de la table, **caractérisé en ce que** l'axe de rotation (54) de la lame de scie (14) peut être mis au niveau du plateau (30) de la table, sachant que la lame de scie (14) peut aller et venir de telle manière que l'axe de rotation porté à la hauteur du plateau (30) de la table se situe en dehors du plateau (30) de la table, **en ce que** le plateau (30) de la table peut être réglé dans le plan x-y parallèlement à l'étendue longitudinale de la fente (50), et **en ce que** des dispositifs sont prévus sur le plateau (30) pour positionner un profilé creux en forme de barre (12) sur le plateau (30) avec n'importe quelle orientation par rapport à la lame de scie (14) pouvant être définie au préalable.

2. Dispositif de sciage selon la revendication 1, **caractérisé en ce qu'**est prévue une broche réglable (34) pour déplacer le plateau (30) de la table, qui est montée, d'une part, sur la table (11) et, d'autre part, sur le plateau (30) de la table.

3. Dispositif de sciage selon la revendication 1 ou 2, **caractérisé en ce qu'**un listel de butée (46) pour un profilé creux (12) reposant sur le plateau (30) de la table peut être fixé sur le plateau (30) de la table dans n'importe quelle position dans la direction x-y, de manière à ce que le profilé creux (12) sur le plateau (30) de la table puisse être positionné sur le plateau (30) de la table avec n'importe quelle orientation par rapport à la lame de scie (14) pouvant être définie au préalable.

4. Dispositif de sciage selon la revendication 3, **caractérisé en ce que** le listel de butée (46) est fixé sur un élément d'immobilisation (42) qui peut être bloqué dans une rainure (40) du plateau (30) de la table.
